(19) **Europäisches Patentamt / European Patent Office / Office européen des brevets**

(11) **EP 4 675 305 A1**

(12) **EUROPEAN PATENT APPLICATION**

(43) Date of publication:
07.01.2026 Bulletin 2026/02

(21) Application number: 24186616.9

(22) Date of filing: 04.07.2024

(51) International Patent Classification (IPC):
**G01S 7/295** (2006.01) **G01S 13/42** (2006.01)
**G01S 13/931** (2020.01)

(52) Cooperative Patent Classification (CPC):
**G01S 13/42; G01S 7/295; G01S 13/584;
G01S 13/931;** G01S 2013/93276

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **VOLKSWAGEN AG**
**38440 Wolfsburg (DE)**
• **Fraunhofer-Gesellschaft zur Förderung
der angewandten Forschung e.V.
80686 München (DE)**

(72) Inventors:
• **Kurz, Dr. Heiko Gustav**
**30177 Hannover (DE)**
• **Meinecke, Dr. Marc-Michael**
**38524 Sassenburg (DE)**
• **Simoni, Dr. Renato**
**53111 Bonn (DE)**
• **González-Huici, Dr. María Antonia**
**53123 Bonn (DE)**
• **Greiff, Dr. Christian**
**53179 Bonn (DE)**
• **Gisder, Dr. Thomas**
**38446 Wolfsburg (DE)**
• **Kurtscheid, Dr. Christian Philipp**
**53547 Dattenberg (DE)**

(54) **PARAMETRIZATION OF TARGET DIRECTION FOR SKEWED L-SHAPED MIMO RADAR ARRAYS FOR FAST ANGULAR ESTIMATION**

(57) The invention relates to the determination of the angle of an obstacle with respect to a radar system. Especially the invention is concerned with the transformation of radar data into the angle domain. A method for transforming radar data of a coherent MIMO radar system to the angle domain is proposed. The coherent MIMO radar system comprises transmitter antennas (Tx) and receiver antennas (Rx) spanning a virtual 2D aperture wherein two lines defining two physical directions exist, which are not collinear and wherein a group of said antennas is associated with each of said two lines, and wherein the antennas of each of said two groups are spaced apart from each other mainly along the physical direction associated with the respective line of said two groups, where in the calculations to transform the received data from a delay/Doppler domain to an angle domain is carried out using a parameterization in a coordinate system that is a dual basis to a basis constructed from the two physical directions and a third direction being perpendicular to the first physical direction and said second physical direction, and wherein the origin is chosen to be the point of intersection of the lines defined by the two physical directions or the midpoint of the line segment connecting the points of closest contact of these two lines.

Fig. 1

**Description**

The invention concerns the detection of obstacles in the surrounding of the vehicle by a radar system, in particular of a coherent radar system like in MIMO radar. In particular it concerns determination of the relative angles of detected obstacles.

MIMO stands for multiple input multiple output and describes radar systems that use radar units with transmission (Tx) and reception (Rx) antennas that are distributed in a two-dimensional arrangement. The transmission antennas transmit different waveforms such that the echo signals received by the reception antennas can be identified in a common evaluation of all received signals. Signal generation and signal evaluation is carried out in a central station. The signals are synchronized for example by using the phase locked transmission of the signals between the central station and the distributed radar units by modulating the signals onto an optical carrier.

The calculation effort to determine the angle of the detected obstacle is immense. For a practical scenario using a radar array of $28 \times 32$, $N_{Tx} = 28$ Transmitters Tx and $N_{Rx} = 32$ receivers Rx, a distributed both on two axis of an array, where the axis are not necessarily perpendicular, a field of view covering an azimuth of $\pm 60°$ and an elevation $\pm 15°$, and where in the angular range is resolved ten thousand azimuth steps $M_{az} = 10^4$ and in the elevation in one hundred elevation steps $M_{el} = 10^2$ about $10^9$ floating point operations ($N_{Tx} N_{Rx} M_{az} M_{el} \approx \mathbf{10^9}$) are necessary for each relative velocity/range-tuple for which echo signals have been received. The amount of memory needed evaluates roughly to ($N_{Tx} + N_{Rx}) M_{az} M_{el} \approx \mathbf{10^8}$. Thus in a first evaluation which can be carried out without making use of the coherence the relative speed (from the detected Dopplershift in the frequency of the echo signal) and the range (from the delay between emission and reception of the echo) can be determined. Compared to angle determination, the calculation effort for determining the distance and relative speed is low. The following will only be concerned with the angle determination.

Further in practical cases the axis defining the array of transmitters Tx and receivers Rx are often curved and not parallel or perpendicular to the horizontal plane or more precisely to the local "horizontal" plane the vehicle is moving on. The coordinate system, which is used to define the azimuth and the elevation is linked to this local "horizontal" plane. The coordinate system can also be considered fixed with respect to the vehicle.

WO 2023/119316 A1 describes automotive glazing comprising a first substrate of glass or polymer, at least one radar unit and one or more antenna units connected with the radar unit, wherein the radar unit is configured to communicate with the one or more antenna units and function with minimum signal loss. At least one cut-out is defined on the first substrate, wherein at least a portion of the antenna unit or the radar unit is aligned with the cut-out on the first substrate.

US 2018/0246204 A1 describes a MIMO radar transceiver assembly including a plurality of transceiver circuit regions and a plurality of antennas. The plurality of antennas include a first transmit antenna coupled to a first transceiver circuit region among the plurality of transceiver circuit regions, a first receive antenna coupled to the first transceiver circuit region, a second transmit antenna coupled to a second transceiver circuit region among the plurality of transceiver circuit regions, and a second receive antenna coupled to the second transceiver circuit region. At least one of the second transmit antenna and the second receive antenna is interleaved between the first transmit antenna and the first receive antenna. Interleaving of the antennas can increase virtual aperture and angular resolution of the radar system without increasing physical dimensions of the transceiver assembly.

All known radar systems for vehicles suffer the lack that the computation is slow or not achieving the resolution desired. It is therefore a technical objective to improve the speed of the radar measurement and to also improve the angular resolution or at least not reduce the angular resolution when speeding up the determination of the angle determination.

The objective is solved according to a method for transforming MIMO radar system data into the angel domain according to claim 1. Further embodiments are covered by the dependent claims.

Basic idea

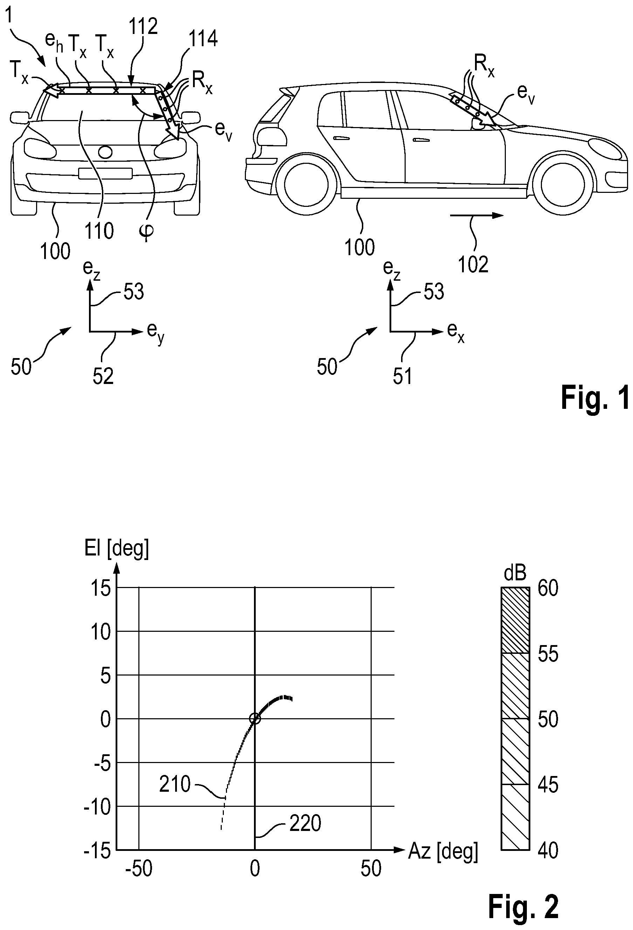

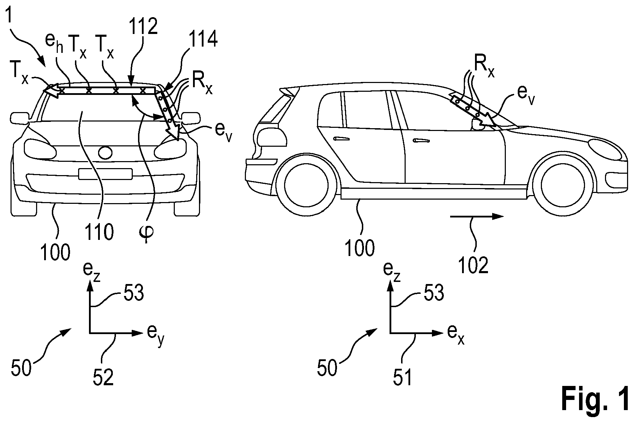

The invention is based on the notion to evaluate the angular resolution of the received signals by using a parameterization of the direction of arrival that is different from the usual azimuth /elevation defined in a Cartesian coordinate system fixed to the vehicle. It is rather proposed to use a dual basis. This can be constructed from the axis defining the array of the MIMO radar antennas. In an automotive context, such an array might be integrated for example along the windshield 110 boundaries or edges 112, 114 of the car. Fig. 1 displays this geometry. Due to aerodynamic and aesthetic reasons, the windshield is usually not perpendicular to the forward direction 102 of the car 100 denoted $e_x$ in Fig. 1. More importantly, the two edges 112, 114 of the windshield 110, along which the antenna elements are placed, do not meet at right angle (cf. angle $\varphi$ between array axes in Fig. 1).

The direction of arrival (DoA) u of an echo signal parameterized in terms of azimuth/elevation angles ($\phi, \theta$) or the respective electric angles ($u_x, u_y, u_z$) as used in the prior art is given by:

$$u(\phi,\theta) = \cos(\theta)\cos(\phi)\,e_x + \cos(\theta)\sin(\phi)\,e_y + \sin(\theta)\,e_z = u_x e_x + u_y e_y + u_z e_z \; (1).$$

It shows that the (far-field) phase terms appearing in the delay/Doppler snapshots array processing to transform the delay/Doppler data to the angle domain do not decouple as in the case of a frontal rectangular array.

To illustrate this effect with an example, consider a frontal L-shaped array with angle $\varphi$ between the axes, where the horizontal axis h contains the transmitters and the not necessarily perfectly 'vertical' axis v contains the receivers. With the virtual antenna positions at $d = te_h + re_v$ with $e_h$ = -$e_y$ and $e_v$ = -$s_\varphi e_z$ - $c_\varphi e_y$, the phase term in standard parametrization would be proportional to

$$-u^T d = u_y t + u_z s_\varphi r + u_y c_\varphi r \; (2),$$

where $s_\varphi = \sin\varphi$ and $c_\varphi = \cos c_\varphi$

The horizontal angle $u_y$ and the vertical receiver position r do not decouple. As this would for a fronal rectagular antenna array.

The inventers found that the last term is due to a mismatch of the parameterization used. This last term, i.e. the mismatch of the parameterization of the direction of arrival (DoA) is also apparent in the ambiguity function plotted in azimuth/elevation domain. Fig. 2 depicts an angle spectrum in the azimuth/elevation parameterization. This corresponds to an ambiguity function (also called point spread function) for a calculation in standard azimuth/elevation parameterization obtained for an skewed L-shaped antenna array comprising receiver antennas Rx and transmitter antennas Tx on both axes of the L. As depicted in Fig. 2 the 'azimuth ridge' 210 of high ambiguity, shown for this geometry with Tx/Rx elements on both axes, does not correspond to the coordinate axes, but is curved. This curvature and also the precise sidelobe structure usually depend also on the target direction, which is a big disadvantage for the runtime of estimation/detection algorithms like CLEAN. The 'elevation ridge' 220 for this broadside target coincides with the coordinate axis.

Only for right angles $\varphi = \pm 90°$ the coupling between horizontal angle $u_y$ and the 'vertical' receivers at positions r disappears.

It is therefore proposed to carry out any calculation that is related to the transformation of received data from the delay/Doppler domain to the angular domain using a parameterization using a dual basis that is constructed from the two physical directions defining the MIMO antenna array and a direction being perpendicular to these two directions.

Preferred embodiment

The invention proposes a method for using a coherent MIMO radar system comprising transmitter antennas (Tx) and receiver antennas (Rx) spanning a virtual 2D aperture wherein two physical directions exist, which are not collinear and wherein said antennas are grouped according to their location in the array in two groups, one of which is associated with one of said direction and the other groups associated with the other direction of said two physical directions, and wherein the antennas of each of said two groups are spaced apart from each other mainly along the physical direction associated with the respective of said two groups, where in the calculations to transform the received data from a delay/Doppler domain to an angle domain is carried out using a coordinate system that is a dual basis to a basis constructed from the two physical directions and a third direction being perpendicular to the first physical direction and said second physical direction, and wherein the origin is chosen to be the point of intersection of the lines defined by the two physical directions or the midpoint of the line segment connecting the points closest contact of these two lines.

Mainly along the physical directions has to be understood, such that two physical directions (i.e. lines) can be fitted to the antenna positions (e.g. by linear regression) and that none of the antennas deviate from theses fitted physical direction by more than a predetermined threshold. This threshold can be set to less than 10% of the maximum distance between antennas along the respective direction. The physical deriction can also be determines by considereing the antanna positions as a point cloud. The physical directions can be deduced by evaluation the main eigen-vectors of the covariance matrix of this point cloud.

This ensures that the calculation effort can be reduced drastically without any loss in accuracy. It is even possible to increase the number of antennas to improve the MIMO radar and still retain some of the computational reductions.

According to one embodiment the dual basis vectors are derived as column vectors of an inverted and transposed matrix D=B$^{-T}$ being constructed from vectors defining the two axis v, h spanning the radar antenna array and their normal n, where $B = (n, h, v) \in \mathbb{R}^3$ and D= (n*,h*,v*).

In 3-dimensional Euclidean space, for a given basis {$g_1$, $g_2$, $g_3$} the dual basis {$g^1$, $g^2$, $g^3$} is biorthogonal, i.e full fills the the following relation with regard to the scalar product $\cdot$ :

$$g_i \cdot g^j = \delta_j^i \begin{cases} 1 & \text{if } i = j \\ 0 & \text{else} \end{cases} \ (3)$$

By virtue of these features the computational efforts can be drastically reduced as the third term of equation (2) vanishes in the parameterization of the dual basis. In that case, the matched filter to transform delay/Doppler snapshots $x$ into angle domain becomes particularly simple: after reshaping the snapshot $x$ into a matrix $X$ with rows corresponding to Rx and columns to Tx, application of the matched filter

$$R^H X \bar{T} \ (4)$$

becomes a matrix product where $R, T$ are (small) sensing matrices of appropriate size. The Superscript H indicates that the respective Matrix is the Hermitian transform i.e. the matrix is transposed and complex conjugated. A complex conjugated matrix is indicated by a dash above the matrix. In contrast, the general case $A^H x$ requires significantly more computation as well as memory to store the (large) sensing matrix A.

Compared to azimuth/elevation parameterization or a parameterization with standard electric angles, the dual angles' ($u_h$, $u_v$) parametrization requires less computation to process data and also less memory to store the sensing matrix.

Let $x \in C^{N_{Tx}N_{Rx}}$ denote a delay/Doppler snapshot, i.e., one complex number from each channel, that shall be transformed into angular domain. Divide the channels into the four obvious groups (cf. Tab. 1), such that the snapshot consists of four subparts:

$$x = (x_{hh}, x_{vv}, x_{hv}, x_{vh}). \ (5)$$

The first index $k = h$ or $v$ of an element $x_{kl}$ refers to the axis of the transmitter antenna Tx and the second index $l = h$ or $v$ to the location of the receiver antenna Rx.

Four channel types exist for an L-shaped MIMO array with $N_{Tx}^h$ Tx elements on the horizontal axis, with $N_{Tx}^v$ Tx elements on the vertical axis, with $N_{Rx}^h$ Rx elements on the horizontal axis, and with $N_{Rx}^{hv}$ Rx elements on the vertical axis:

Table 1:

| Four channel types | Rx on horizontal $(N_{Rx}^h)$ | Rx on vertical $(N_{Rx}^v)$ |
|---|---|---|
| Tx on horizontal $(N_{Tx}^h)$ | $x_{hh}$ | $x_{hv}$ |
| Tx on vertical $(N_{Tx}^v)$ | $x_{vh}$ | $x_{vv}$ |

After reshaping the data for mixed channels, such that e.g. the vector $x_{hv} \in C^{N_{Tx}^h N_{Rx}^v}$ becomes a matrix $X_{hv} \in C^{N_{Rx}^v \times N_{Tx}^h}$, by virtue of the parameterization in the dual angels, application of the full sensing matrix splits into four simpler terms of the kind :

$$A^H x \equiv A_h^H x_{hh} + A_v^H x_{vv} + R_v^H X_{hv} \bar{T}_h + R_h^H X_{vh} \bar{T}_v \qquad (6)$$

where

- $A$: Full sensing matrix ($N_{Tx}N_{Rx} \times M_h M_v$)
- $A_h$: Full horizontal split sensing matrix ($N_h \times M_h$)
- $T_h$: Horizontal Tx split sensing matrix $(N_{Tx}^h \times M_h)$
- $R_h$: Horizontal Rx split sensing matrix $(N_{Rx}^h \times M_h)$
- $M_h$: Number of grid points for horizontal angle to cover the field of view

- $A_v$: Full vertical split sensing transforming matrix ($N_v \times M_v$)

- $T_v$: Vertical Tx split sensing matrix $(N_{Tx}^v \times M_v)$

- $R_v$: Vertical Rx split sensing matrix $(N_{Rx}^v \times M_v)$

- $M_v$: Number of grid points for vertical angle to cover the field of view

For simplicity of explanation the formula (6) as shown above is only true in spirit. The actual implementation requires some care with the dimensions and should be

$$\text{reshape}(A^H x, [M_h, M_v]) = A_h^H x_{hh} + (A_v^H x_{vv})^T + (R_v^H X_{hv} \bar{T}_h)^T + R_h^H X_{vh} \bar{T}_v \quad (6a)$$

where the + behaves as in the computer program MATLAB, R2023b Update 6; (10. January 2024), from the company MathWorks, for the sum of a row and a column vector and reshape like the respective function in said program.

The first two terms correspond to simple 1D array processing tasks, while the second two terms are comparatively small due to the 'Kronecker structure'.

For a target with the parameters range, velocity, and angle expressed by a parameter vector $(r_0, v_0, u_0)$, the signal obtained after transforming the optimal delay/Doppler cut into angle domain is given by

$$s(u_h, u_v; r_0, v_0, u_0) = P(u_h - u_{h0},\ u_v - u_{v0})$$

with the point **spread** function also called ambiguity function, or array factor)

$$P(x, y) = \sum_{n,m} \exp\left(ikx(r_n^h + t_m^h)\right) + \sum_{n,m} \exp\left(iky(r_n^v + t_m^v)\right) + \sum_{n} \exp\left(ikxr_n^h\right) \sum_{m} \exp\left(ikyt_n^v\right)$$
$$+ \sum_{n} \exp\left(ikxr_n^v\right) \sum_{m} \exp\left(ikyt_m^h\right)$$

where k = $2\pi/\lambda$ is the wavenumber and $t_m^h$ is the position of the m-th transmitter along the horizontal axis, etc.

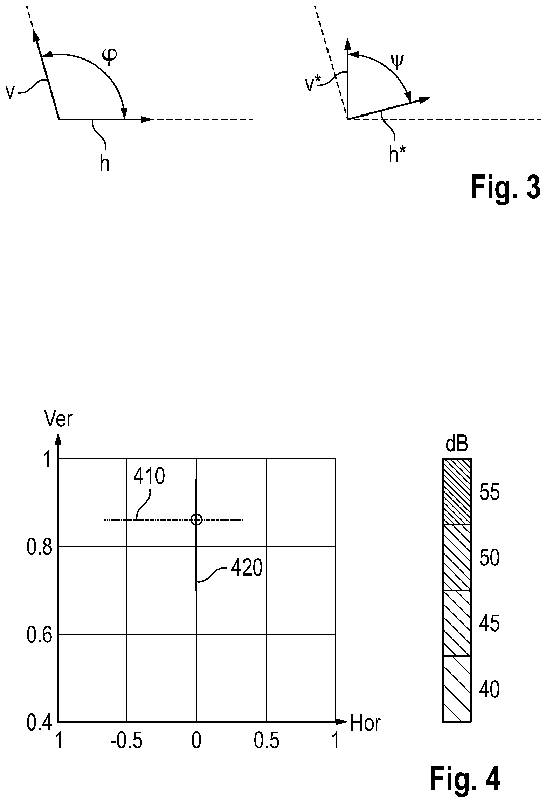

From the formula for $P(x, y)$ and also corroborated by the simulation results depicted in Fig. 4, one observes that the sidelobe ridges 410, 420 align with coordinate axes of the dual basis. This is in contrast to calculation results performed with the standard parametrization, cf. Fig. 2. It is pointed out here that the radar antenna array is flat to which these results correspond.

Whenever x or y is zero in the ambiguity function, there is a strong contribution from one of the first two terms. Furthermore, the fact that it depends only on the differences $u_h$ - $u_{h0}$ in dual angles means that the point spread function around each point is the same.

According to one embodiment the method comprises the steps of:

(a) receiving a delay/Doppler-maps;
(b) precompute split sensing matrices in the dual basis

$A_h$, the full horizontal split sensing matrix of dimension $N_h \times M_h$, wherein $N_h$ is the sum of the number of transmitter antennas and receiver antennas on the horizontal and wherein $M_h$ is number of grid points for horizontal angle to cover the field of view in the dual basis,

$T_h$ the horizontal transmission (Tx) split sensing matrix with the dimension $N_{Tx}^h \times M_h$, wherein and $N_{Tx}^h$ is the number of transmitter antennas on the horizontal axis,

$R_h$ the horizontal receiver (Rx) split sensing matrix $N_{Rx}^h \times M_h$, wherein $N_{Rx}^h$ is the number of receiver antennas on the horizontal axis,

$A_v$, the full vertical split sensing matrix of dimension $N_v \times M_v$, wherein $N_v$ is the sum of the number of transmitter antennas and receiver antennas on the vertical axis and wherein $M_v$ is number of grid points for vertical angle to cover the field of view in the dual basis,

$T_v$ the vertical transmission (Tx) split sensing matrix with the dimension $N_{Tx}^v \times M_v$, wherein and $N_{Tx}^{hv}$ is the number of transmitter antennas on the vertical axis,

$R_v$ the vertical receiver (Rx) split sensing matrix $N_{Rx}^v \times M_v$, wherein $N_{Rx}^v$ is the number of receiver antennas on the vertical axis,

and for each range-velocity of interest

(c) extracting a snapshot vector $\mathbf{x}_s$ comprising of $N_{Tx}$ times $N_{Rx}$ complex numbers from the received delay/Doppler-map,

(d) ordering the vector components $x_{yz}$ of the extracted snapshot vector $\mathbf{x}_s$ into sub vectors $\mathbf{x}_{hh}$, $\mathbf{x}_{vv}$, $\mathbf{x}_{hv}$, $\mathbf{x}_{vh}$ such that $\mathbf{x}_s = (\mathbf{x}_{hh}, \mathbf{x}_{vv}, \mathbf{x}_{hv}, \mathbf{x}_{vh})$, wherein the first index (v, h) is referring to axis the sender is located on and the second index (v, h) is refereeing to the axis the receiver located on, and

(e) regrouping the mixed-term sub vectors into datapoint matrices $X_{hv}$, $X_{vh}$ and

(f) transforming the snapshot vector $\mathbf{x}_s$ into the angle domain by applying the split sensing matrices according to

$$\mathrm{reshape}(A^H x, [M_h, M_v]) = A_h^H x_{hh} + (A_v^H x_{vv})^T + (R_v^H X_{hv} \bar{T}_h)^T + R_h^H X_{vh} \bar{T}_v.$$

The result is in the dual-basis angles. These can be converted normal azimuth-elevation-angles easily.

The surfaces along which radar antennas are position in cars, like windshield edges not just only do not meet at right angles but are usually also curved. The curvature introduces the complication that the normal angle

$$u_n = u_n(u_h, u_v) \qquad (9)$$

appears in the phases of delay/Doppler snapshots and prevents a decoupling of terms.

In order to cope with curvature of at least one of the directions defining the oblique grid of the MIMO antennas, in some embodiments, thus it is proposed to divide the field of view in the angle domain in equal sized sectors.

The intuition here is that the difference between two near-field terms

$$\|p - d\| - \|p_0 - d\| \approx R - R_0 - \delta u^T d \qquad (10)$$

is approximated sufficiently well by a far-field model for the relative DoA $\delta u = u - u_0$, even if the target $p = Ru$ and reference point $p_0 = R_0 u_0 \approx p$ themselves cannot be considered to be the far-field (cf. below for rule of thumb on the required sector size). Furthermore, small DoA deviations are nearly orthogonal to the reference direction $\delta u^T u_0 \approx 0$ in a sufficiently small sector, meaning that the normal angle $u_n$ is negligible in a local dual basis with $u_0$ as normal direction. The 'golbal dual basis vectors' are projected in to the plane perpendicular to $u_0$.

This partitioning of the field of view into small sectors has the further advantage that an estimation of the array manifold for each sector can ignore the antenna positions along the center direction, since those become indistinguishable from phase errors. This reduces the dimensionality of optimization tasks. That the estimation of calibration parameters needs to be performed for each sector surely counteracts the savings from a reduced optimization task. But for real antennas, an independence of antenna positions over the whole field of view is anyhow not a valid assumption.

Thus the calculation is preferably carried out for each of the sectors with relative angles towards the sector center.

Thus once the antenna array and its array defining directions as well an origin have been determined and the angular resolution has been chosen data in the form of delay/Doppler-maps can be transformed into the angular domain for each range-velocity-tuple of interest.

Therefore in a preferred embodiment of the method for transforming the data into angular domain comprises the steps of:

once

building sectors of qual size for the field of view in the dual basis;
precompute a nearfield model $\mathbf{a}_s$ for each sector center;
precompute sensing split-matrices $A_h$, $A_v$, $T_h$, $T_v$, $R_h$, $R_v$ with relative angle hypotheses;

and then for each range and velocity combination and for each sector:

retrieving the delay/Doppler slice $x_s$ corresponding to the respective sector center;

compensating the retrieved delay /Doppler slice $x_s$ with the near field model at the sector center:

$$\tilde{x}_s = \bar{a}_s \odot x_s$$

splitting the compensated snapshot slice vector $\tilde{x}_s$ into the respecitve subparts and rearranging them into subvectors $x_{hh}$, $x_{vv}$, and datapoint matrices $X_{hv}$, $X_{vh}$; and applying the split sensing matrices $A_h$, $A_v$, $T_h$, $T_v$, $R_h$, $R_v$ to transform the data into the angle domain using the subsectors and datapoint matrices:

$$A^H \tilde{x}_s \equiv \text{reshape}(A^H x, [M_h, M_v]) = A_h^H x_{hh} + (A_v^H x_{vv})^T + (R_v^H X_{hv} \bar{T}_h)^T + R_h^H X_{vh} \bar{T}_v$$

For each sector, one thus obtains a partial angle spectrum centered around the center of the sector. As the sectors do not overlap, the the full angular spectrum is composed of the partial angular spectra.

The results obtained in this way are further processed in the usual manner.

Thus according to one embodiment the method further comprises

once

(g) splitting the field of view in the dual basis into sectors of equal size;
(h) precomputing a nearfield model $\mathbf{a}_s$ for each sector center, used

aa) to compensate in the measured data for the effects that array curvature and nearfield targets have on the phases; and
bb) to establish the sector center as reference direction for further processing;

(i) precomputing split sensing matrices of step (b) for a relative angle hypothesis in the dual basis of a sector, where $M_h$ is number of grid points for horizontal angle and $M_v$ is number of grid points for vertical angle, required to cover the field of view of one sector in the dual basis;

and wherein the steps (c) to (f) for each range-velocity of interest are carried out for each sector,

where in step (c) a snapshot vector slice $\mathbf{x}_s$ comprising $N_{Tx}$ times $N_{Rx}$ complex numbers from a received delay/Doppler-map corresponding to the sector center is extracted;
and wherein
(k) the extracted snapshot vector slice $\mathbf{x}_s$ is compensated by applying the nearfield model $\mathbf{a}_s$ to get a compensated snapshot vector slice $\tilde{x}_s$.

$$\tilde{x}_s = \bar{a}_s \odot x_s ,$$

and wherein steps (d), (e), and (f) are performed using the compensated snapshot vector slice $\tilde{x}_s$ and the split sensing matrices for the relative angle hypothesis according to step (i).

According to one embodiment the axes defining the oblique grid of the antennas that are used to construct the dual basis are determined by fitting a two respective lines to the antenna positions.

Very good results are achieved by minimizing the quadratic distances of the antenna positions from the respective fitted line. For this approximation tasks the antenna positions may be split into two groups to separate the antennas of the "horizontal" axis from those of the "vertical" axis.

When the two approximated lines intersect this point will naturally be the origin for the basis. The direction for the basis vectors are chosen such that the normal direction points roughly towards the target area and one further preferentially obtains a right handed basis.

In general the straight lines approximating the axes of the gird-array for the antenna positions will not intersect. In these cases it is beneficial to choose the midpoint between points of closest contact of the lines as origin.

For the determination of the sensing matrix or the split sensing matrices the postions of the receiver antennas and the postions of transmitter antennas are preferably projeceted onto the physical directions used to derive the dual basis.

Embodiments of the invention are now described with reference to the accompanying drawings in which

Fig. 1        displays the geometry for skewed L-shaped array of radar antennas integrated into the windshield boundary of the car in front view and side view;

Fig. 2      depicts an angle spectrum with the azimuth/elevation parameterization for a target at broadside;

Fig. 3      depicts an example of the "horizontal" and "vertical" axes of the basis and the respective dual basis;

Fig. 4      shows the angle spectrum / point spread function $s(u_h, u_v; r_0, v_0, u_0)$ from a simulation, which in case of one target only are identical;

Fig. 5.     shows the conversion from electric angles to dual angles and vice a versa;

Fig. 6      depicts the array positions of antennas, the lines fitted to those antenna positions and the basis vectors of the dual basis;

Fig. 7      depicts just the antenna positions and the fitted lines of figure 6;

Fig. 8      depicted the points of closest contact of those lines of figure 6;

Fig. 9      depict the projection of the antenna positions on the fitted lines;

Fig. 10     deviation of the antennas from the respective fitted axes of the grid array;

Fig. 11     depicts the sector centers of sectors segmenting the field of view in dual angle parameterization transformed into the azimuth/elevation parameterization;

Fig. 12     shows a delay channel map;

Fig. 13a    depicts the point spread function for a simulation carried out in azimuth/elevation parameterization for an array without curvature, where the axis intersect, along which the antennas are located;

Fig. 13b    depicts the point spread function for a simulation carried out in dual basis parameterization for an array without curvature, where the axis intersect, along which the antennas are located;

Fig. 14a    depicts the point spread function for a simulation carried out in azimuth/elevation parameterization for a an array of antennas, where the axes do not intersect and one axis is curved;

Fig. 14b    depicts the point spread function for a simulation carried out in dual basis parameterization for a an array of antennas, where the axes do not intersect and one axis is curved; and

Fig. 15     flowchart for a method for transforming data into the angular domain using a dual basis parameterization for a skewed antenna array taking into account curvature of an array axis as well.

The very basic geometry of the MIMO radar 1 is depicted schematically in fig. 1. Even though it has already been mentioned above. It will be described in more detail here once again. The MIMO radar 1 comprises an array 5 of transmission antennas Tx denoted by "x" and receiver antennas Rx, which are depicted by circles "o". The array 5 can span a virtual 2D aperture for target direction estimation with physical transmission antennas Tx and receiver antennas Rx placed only along the boundaries 112, 114. The simplest such configuration is an L-shaped geometry as indicated in Fig. 1. Fig. 1 depicts a car 100 in front view (left hand side) and side view (right hand side) , as well as the axes 51,52, 53 of an orthonormal basis 50 associated with the car 100 In an automotive context, such an array 5 might be integrated for example along the edges 112, 114 of a windshield 110. Edges 112, 114 of the windshield 120 coincide with two directions denoted horizontal axis $\mathbf{e}_h$ and vertical axis $\mathbf{e}_h$, even though they do not necessarily coincide with the horizontal and a vertical axes in the gravitational sense, even when the car 100 is placed on a horizontal plane.

Due to aerodynamic and aesthetic reasons, the windshield 110 is usually not perpendicular to the forward direction 102 of the car 100 coinciding with one of the basis axes denoted $e_x$ 51. More importantly, the two edges 112, 114 and therefor the horizontal direction $\mathbf{e}_h$ and the vertical direction $\mathbf{e}_v$ of the windshield 110, along which the antenna elements Tx, Rx are placed, do not meet at a right angle. The angle enclosed between array directions $\mathbf{e}_h$ and $\mathbf{e}_v$ is depicted by $\varphi$.

In consequence, a parametrization of a direction of arrival (DoA) u of an echo signal from a (point like) object in terms of azimuth/elevation angles $(\phi, \theta)$ or the respective electric angles:

$$u(\phi,\theta) = \cos(\theta)\cos(\phi)\,e_x + \cos(\theta)\sin(\phi)\,e_y + \sin(\theta)\,e_z = u_x e_x + u_y e_y + u_z e_z \ (1)$$

is not particularly well suited to this geometry. Indeed, the far-field phase terms appearing in array processing of the delay/Doppler snapshots do not decouple as in the case of a frontal rectangular array.

To illustrate this effect with an example, consider the frontal L-shaped array 5 with angle $\varphi$ between the axes, where the horizontal axis contains the transmitter antennas Tx and the not necessarily perfectly 'vertical' axis contains the receiver antennas Rx. With the virtual antenna positions at $d = te_h + re_v$ with $e_h = -e_y$ and $e_v = -s_\varphi e_z - c_\varphi e_y$, the phase term in standard azimuth/elevation parametrization would be proportional to

$$-u^T d = u_y t + u_z s_\varphi r + u_y c_\varphi r$$

The coupling between horizontal angle $u_y$ and the 'vertical' receivers at positions r disappears for right angles $\varphi = \pm 90°$ only.

The mismatch of the azimuth/elevation parameterization of the DoA is also apparent in the angle spectrum plotted in the azimuth/elevation domain in fig. 2 for geometry shown in fig. 1 already discussed above.

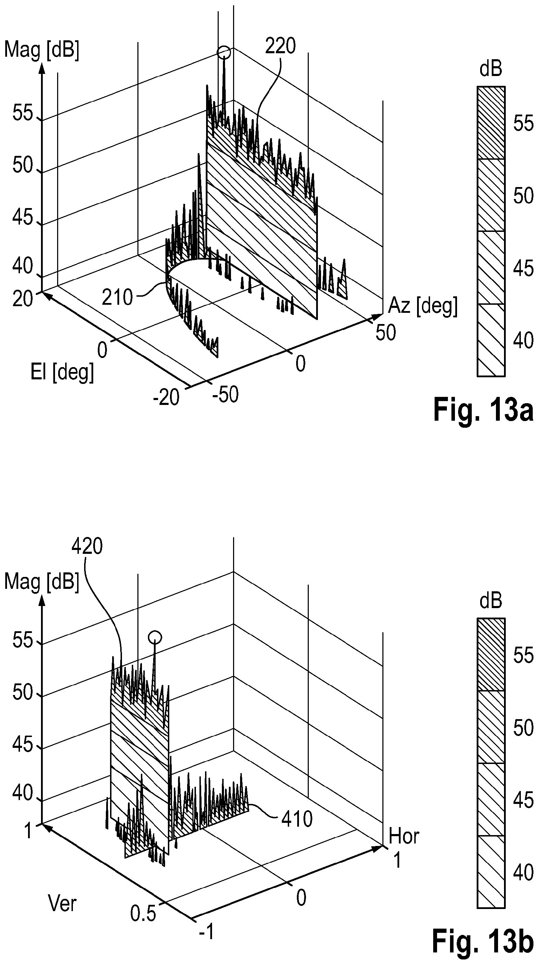

Fig. 13a shows a corresponding simulation result obtained for a completely flat radar array, i.e. the direction along which the receiver antennas Rx and the transmitter antennas Tx are spaced apart are straight and are not curved. Nevertheless the azimuth ridge 210 is curved in this result. Further the time to compute this result for a single target at 34 m distance and an azimuth of 30° and an elevation of 10° with a 60 dB signal was 28 seconds.

To resolve this problem it is proposed to carry out the calculations for transferring the delay/Dopplers slices $x_s$ into the angle domain using a more appropriate parameterization. Even for a skewed L-shaped array, it is still possible to find a parametrization of target directions, i.e. the DoA, that results in a decoupling as for the right-angled L-shaped array in the standard azimuth/elevation parameterization. In this parameterization the ambiguity function possesses the desirable properties again.

The proper parameterization is based on the notion of a dual basis constructed from the array axes, along which the antennas are located. In fact this parameterization is also suitable for array where the antennas are located at in an oblique grid defined by the two axes enclosing an angle $\varphi$.

The axes of the antenna grid named for brevity h, and v according to fig. 3 together with the normal $n \propto h \times v$ as obtained from their cross product, form a basis for 3D Euclidian space. They can be arranged into an invertible matrix

$$B = (n, h, v) \in R^{3 \times 3}.$$

The corresponding dual basis is defined as the columns of the inverted and transposed matrix

$$D = B^{-T} = (n^*, h^*, v^*) \in R^{3 \times 3}.$$

Its basic property is that each of the original basis vectors is orthogonal to two dual basis vectors. This is the above mentioned bi-orthogonality of the dual basis. In fact, it follows immediately from the definition that $D^T \cdot B = I_3$, where $I_3$ is the identity matrix.

It is worth to note some further properties: Even if the vectors of the original basis are normalized (i.e., scaled to unit length), the dual vectors are usually not all of unit length. This happens only for a right-angled L, where the dual basis is the same as the original array basis. But the normal is its own dual vector $n = n^*$.

The **crucial step** is now to express the target directions in terms of the dual basis

$$u = u_n n^* + u_h h^* + u_v v^* \in S^2$$

This simplifies the phase term for array processing, as phase contributions from antenna elements on the horizontal (vertical) axis depend only on the horizontal (vertical) angle'

$$u^T h = u_h$$

,Horizontal angle'

$$u^T v = u_v$$

‚Vertical angle'

The normal angle' does not contribute to the phases in a perfectly flat array. It is also mostly redundant, since the (electric) dual angles ($u_h, u_v$) already contain enough information to fix a direction on a half sphere.

For right-angled L-shaped arrays, one obtains simply the standard electric angles. It is possible to define angles analogue to azimuth/elevation, but they don't seem more convenient for radar processing than the dual angles ($u_h$, $u_v$).

The advantage of the correct parameterization will be apparent when looking at an estimation of the computational efforts needed to carry out the transformation as well as the memory needed.

An estimation for the computational efforts needed in the different parameterization's is derived as follows: example values for a 28x32 array with both Tx and Rx elements on each axis are:

$$N_{Tx} = N_{Tx}^h + N_{Tx}^v = 18 + 10 = 28$$

$$N_{Rx} = N_{Rx}^h + N_{Rx}^v = 22 + 10 = 32$$

$$M_{az} = M_h \approx 10^4$$

$$M_{el} = M_v \approx 10^2$$

Table 2 shows the results for the number of computation as well as the needed memory:

| | Azimuth/Elevation | Dual Angles |
|---|---|---|
| Compute | $N_{Tx}N_{Rx}M_{az}M_{el} \approx \mathbf{10^9}$ | $N_{Tx}^h M_h M_v + \dots$ $\approx \mathbf{10^7}$ |
| Memory | $(N_{Tx} + N_{Rx})M_{az}M_{el} \approx \mathbf{10^8}$ | $N_{Rx}^h M_h + \dots$ $\approx \mathbf{10^5}$ |

Fig. 13b depicts the equivalent situation to that of fig. 13a. Now the dual basis is used for carrying out the transformation to the angle domain. One observes that the "horizontal ridge" 410 is aligned with the horizontal basis axis again. The computation time is reduced from 28 seconds to 0.27 seconds. This is similar to the result shown in Fig.4 for a target at 154 m distance.

It is easily possible to convert points from the dual basis domain to the standard domain of azimuth/elevation.

To convert between azimuth/elevation and dual angles, it is useful to calculate the **direction cosines** (also called electric angles) with respect to the standard (x,y,z)-axis as intermediate step.

With the defining equation of DoA in both coordinate systems

$$u = E u_E = D u_D$$

we find the dual angles as

$$u_D = D^{-1} u_E = B^T u_E$$

from the standard representation in azimuth/elevation

$$u_E = (\cos(az)\cos(el), \sin(az)\sin(el), \sin(el))^T \in S^2$$

The other conversion direction is also immediately obtained with $u_E = D u_D = B^{-T} u_D$

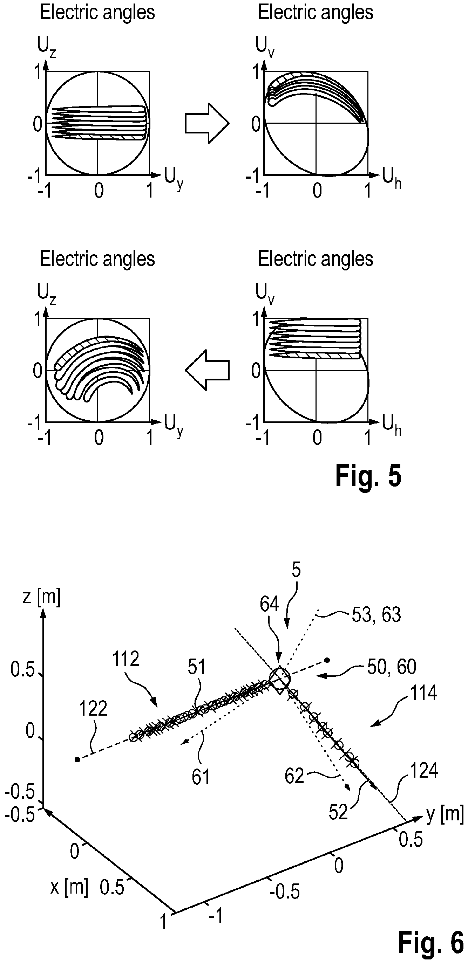

Fig. 5 shows the conversion for an array with geometry as described in fig. 1 or in more detail in Fig. 6 explained in detail below.

Ignoring the windshield inclination, the natural unit vectors h, v describing horizontal and vertical array axes are opposite to y and z axis, respectively. Since the intersection is the upper left corner of the windshield instead of the lower right the directed lines of constant elevation (wherein the different symbols represent different elevations, the direction being indicated by the varying line thickness along the line) appear 'flipped' in both axes. The top row of fig. 5 depicts from left to right the conversion from electric angels to dual angels. The bottom row of fig. 5 depicts from right to left the conversion from dual angels to electric angels (azimuth/elevation).

Fig. 6 depicts the a model of a 28x32 MIMO radar array 5. The geometry is similar to the one chosen in Fig. 1. In this geometry the transmitter antennas Tx and Rx are located along the horizontal edge 112 as well as in the vertical edge 114 of the Skewed L-shaped array 5. The horizontal edge 112 is curved. The transmitters are marked by "x" the receiver antennas by "o" the dashed lines 122 and 124 are the fitted lines for the horizontal and vertical respectively. The vectors 51 and 52 coinciding with the fitted lines and their normal 53 are chosen as basis vectors for the physical space to construct the dual basis best suited to parameterize the DoA. The array orientation is chosen to have the horizontal direction coincide with the negative y-direction with regard to a standard orthonormal basis of the Euclidean space, where the origin is located in the "top left" corner of an imaginary windshield (seen by a driver - top right corner when look at from the front). Forward driving direction of the car will be the x-direction. The dual basis 60 has the vectors 61, 62 and 63. The origin 64 is the midpoint between the points of closest contact of the dashed lines 122, 124.

The array basis is given for example by

$$B = (n, h, v) = \begin{pmatrix} 0.48 & 0 & 0.86 \\ 0 & -1 & 0.18 \\ 0.87 & 0 & -0.48 \end{pmatrix}$$

An angle between $h$ and $v$ is $\varphi = 100.69°$. Inclination of v against 'up' (z-)direction is $61.36°$.

To determine the best approximated array axes, preferably a line is fitted to the positions of antenna elements on each respective axis. Given a point cloud $p_n \in R^3$, $n = \{1, ..., N\}$, the line with the least squared error can be found according to this discussion with the following steps:

- Subtract the center of mass $c = \frac{1}{N} \sum_n p_n$
- Calculate the covariance matrix $S = \Sigma_n (p_n - c)(p_n - c)^T \in R^{3 \times 3}$
- Find principal eigenvector $v$ of covariance matrix (i.e. the one for the largest eigenvalue)
- Fitted line is given by $l(\mu) = c + \mu v$

Preferably the antennas are divided in two groups separating the antennas being located on the different axes. Two lines are thus determined each by the outlines steps above.

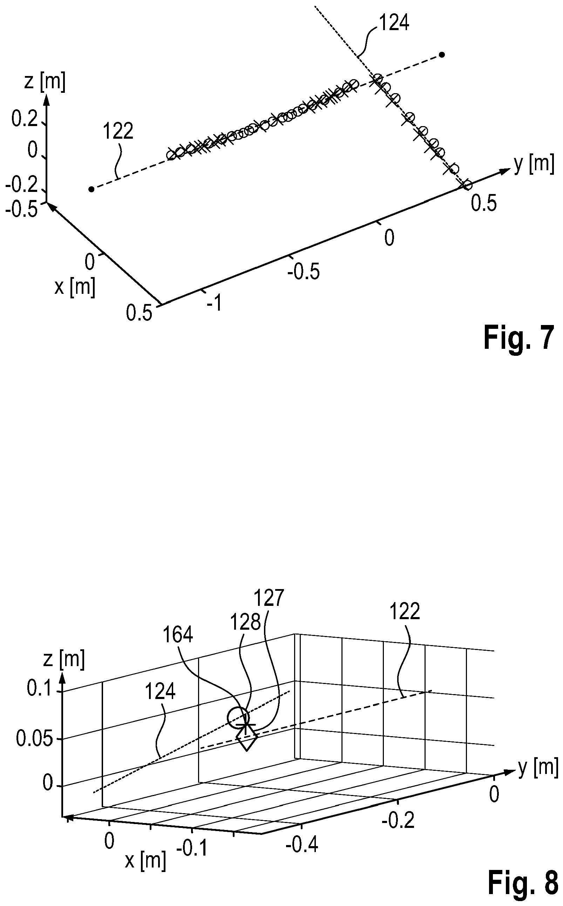

Fig. 7 shows result of the line fitting process only, i.e., shows the antenna position and the fitted lines 122, 124.

An intersection of these lines serves as the natural point of origin.

Unfortunately though, these lines 122, 124 usually do not intersect. It is therefore necessary to find some other point as the origin for the dual basis. The best choice is the midpoint 164 between the points of closest contact 127, 128 of the two lines. The determination of this point will be outline:

Given are two lines $l_i$, $i \in \{1,2\}$,

$$l_i(\mu) = p_i + \mu v_i$$

with $\|v_i\| = 1$.
Critical point of the term

$$\min_{\mu_1, \mu_2} \|l_2(\mu_2) - l_1(\mu_1)\|^2$$

is derived as

$$\begin{pmatrix} \mu_1 \\ \mu_2 \end{pmatrix} = \frac{1}{1-c^2} \begin{pmatrix} 1 & c \\ c & 1 \end{pmatrix} \begin{pmatrix} d^T v_1 \\ -d^T v_2 \end{pmatrix}$$

with $c = v_1^T v_2$ and d = $p_2$ - $p_1$.
Points of closest contact are thus given by

$$l_1 = p_1 + \frac{1}{1-c^2} d^T (v_1 - cv_2) v_1$$

$$l_2 = p_2 - \frac{1}{1-c^2} d^T (v_2 - cv_1) v_2.$$

Fig. 8 depicts the points 127, 128 of closest contact of both fitted lines 122, 124. The midpoint 164 of a line connecting the points of closest contact 127, 128 is chosen an origin 64 for the dual basis 60 (confer fig. 6).
One can project the antenna positions onto the axes or lines 122, 124 of the array 5. Given a point $p \in R^3$ and a line 122, 124 given by

$$l(\mu) = p_0 + \mu v$$

with

$$\|v\| = 1:$$

Then the critical point of $\min_{\mu} \|l(\mu) - p\|^2$ is derived as

$$\mu = (p - p_0)^T v.$$

The projected point is

$$p_l = p_0 + vv^T (p - p_0).$$

Finally, the residual error is

$$\epsilon(p) = \left\| P_v^\perp (p - p_0) \right\|.$$

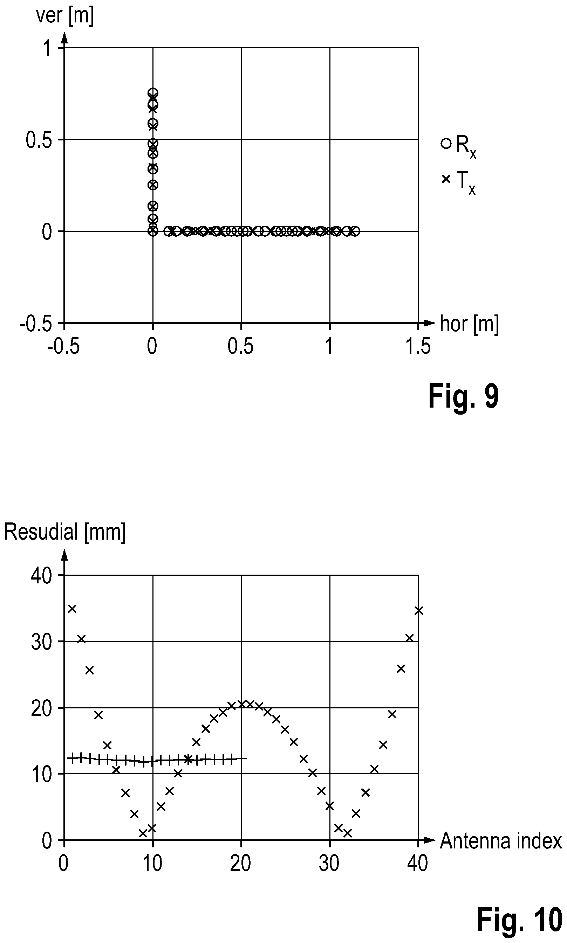

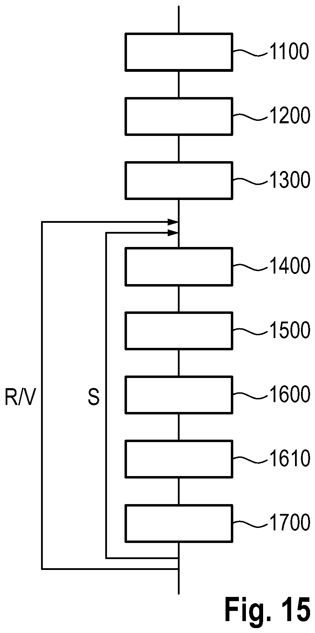

Fig. 9 depicts the Tx ("x") and Rx ("○") antenna positions projected onto the axis of the array. These are the position actually used for determining the split sensing matrices. For evaluation of the near field model for the sector centers the origianl 3D-positions need to be taken into account.
Fig. 10 depicts the residual error for the vertical ("+") and the horizontal ("x") antenna positions. Antenna positions deviate less than 4 cm form the respective fitted axis in the described model.
For the given geometry a target is considered at 34 m distance at 30° azimuth and 10° elevation having a signal strength of 60 dB.
In the following the process of carrying out the angular transformation will be explained in detail in connection with the flowchart of fig. 15.
It is assumed that the delay/Doppler maps have been deduced from the received data. Further the range/velocity-pairs of interest for angular resolution have been determined. These processes will not be explained in this context.
The determination of the dual basis is carried out as described in combination with Fig. 6 to 10. As explained lines can be fitted to the actual antenna positions. These can be used to derive the basis vectors 61, 62, 63 and the origin 64 for the dual basis 60.
The desired angular resolution grid in the dual basis parameterization is chosen in this example to cover the horizontal angles from -0.8 to 0.799 with a step size of 0.001 and the vertical angles from 0.4 to 0.998 and a step size of 0.002. For this resolution it is chosen to divide the angular field of view in 40x30 sectors.

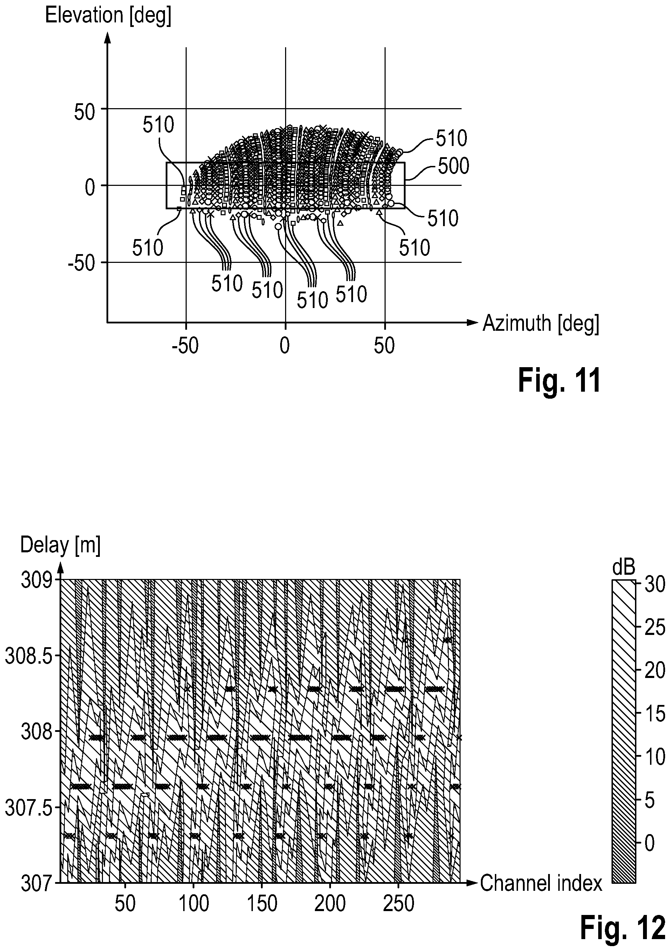

Fig. 11 depicts the transformation of the sector centers of the dual basis field of view sector to the standard parameterization of azimuth und elevation. The sector center positions 510 almost completely cover a rectangular field of view 500 spanning $\pm$ 60° azimuth angle and $\pm$ 15° elevation angle.

To perform the method of transformation 1000 of data provided as delay/Doppler maps into the angle domain as a first step 1100 the sectors are established. They all have equal size and divide the angular field of view in the dual basis parameterization in non-overlapping sectors. In the case discussed here in 40x30 sectors.

As a next step a near field model $\mathbf{a}_s$ is precomputed for each sector center 1200. One complex number for each channel in the MIMO array, in this example 28x32, is determined. This represents the phase shift for the respective channel for a target in direction of the sector center and the range of interest.

Further the spilt sensing matrices $A_h$, $A_v$, $T_h$, $T_v$, $R_h$, $R_v$ with relative angle hypotheses are precalculated 1300

The steps described so far are carried out once only.

Then for each range/velocity tuple of interest, i.e., each tuple of range and velocity for which a target appeared in a non-coherent evaluation of the MIMO radar data the following step are carried out for each sector of the dual angel field of view:

First a delay/Doppler slice $\mathbf{x}_s$ corresponding to the sector center is retrieved for each cannel from the respective delay/channel map 1400. I.e. for each transmitter antenna Tx - receiver antenna Rx pair, the value best representing the echo value at the determined range of interest is selected as a vector element of the delay/Doppler slice $\mathbf{x}_s$.

Fig. 12 depicts as an example a delay/channel map for an object at a range of 154 m at an azimuth of 30° and an elevation of 8.92°. The delays depicted for all the channels correspond to one velocity, i.e. one Doppler frequency associated with the respective velocity/range tuple. The shading indicates the amplitude in dB. The crosses indicate the chosen values.

Then the retrieved delay/Doppler-slice $\mathbf{x}_s$ is compensated by the precomputed near field model for the respective sector center 1500. Each value of the delay/Doppler slice vector $\mathbf{x}_s$ is multiplied by the respective value of the near field model $\mathbf{a}_s$ for the respective sector center.

$$\tilde{x}_s = \bar{a}_s \odot x_s$$

Next the sector compensated delay/Doppler slice vector $\tilde{x}_s$ components are rearranged into sub vectors, where both transmitter and receiver antenna are located on the horozontal line of the radar array $\mathbf{x}_{hh}$, where both transmitter and receiver antenna are located on the vertical line of the radar array $\mathbf{x}_{vv}$, where transmitter antenna is located on the horizontal line and receiver antenna is located on the vertical line of the radar array $\mathbf{x}_{hv}$, and where transmitter antenna is located on the vertical line and receiver antenna is located on the horizontal line of the radar array $\mathbf{x}_{vh}$ 1600.

The mixed term sub vectors $\mathbf{x}_{hv}$ and $\mathbf{x}_{vh}$ are also rearranged as datapoint matrices 1610. The transmitter positions are determining the lines and the receiver positions the columns i.e. the sub vectors are regrouped as $X_{hv}$ and $X_{vh}$.

Finally the pre computed split sensing matrices are applied 1700 to the sub vectors/data matrices using the formular

$$\mathrm{reshape}(A^H x, [M_h, M_v]) = A_h^H x_{hh} + (A_v^H x_{vv})^T + (R_v^H X_{hv} \bar{T}_h)^T + R_h^H X_{vh} \bar{T}_v$$

After performing this for all sectors as indicated by the loop S one yields the complete field of view in the dual basis.

For other range/velocity-tuples the sectors-loop S is repeated as indicated by range-velocity-loop R/V.

This embodiment capable of coping with the curvature of the MIMO radar array.

In the following the simulations for the example just discussed are compared.

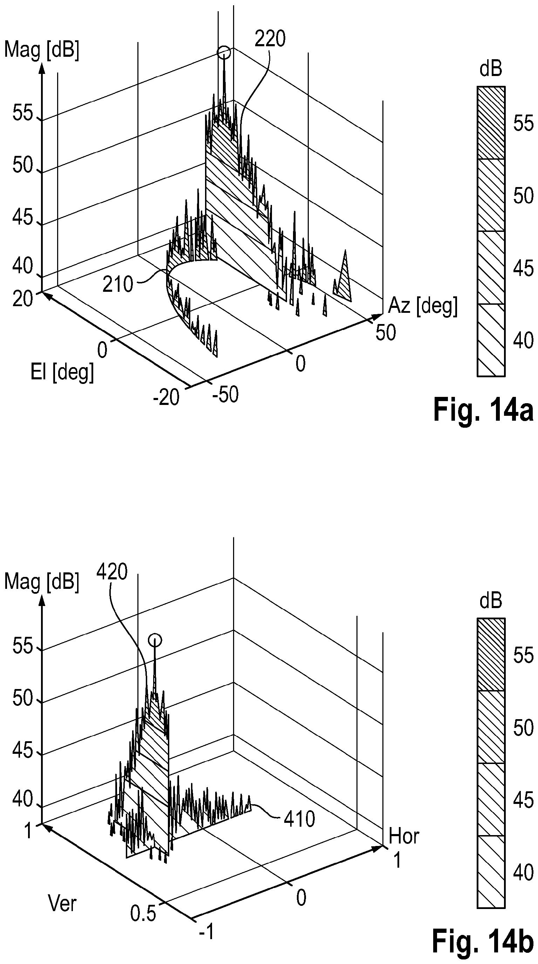

Whereas fig 13a and 13b depict the simulations for a realistic but flat array fig. 14a depicts the evaluation result when calculating in the normal azimuth/elevation parameterization for a realistic and curved radar array. The azimuth ridge 210 is curved. The calculation takes 27 seconds The peaks amplitude is 58.5 dB. This Fig. 14a corresponds to Fig. 2 which show the same result for the another array having no curvature with a target at 154 m distance at broadside.

Fig. 14b now depict in contrast the result of the computation in the dual basis. The calculation time is 0.26 seconds and the peak amplitude results to 58.3 dB. The horizontal ridge 410 is aligned with the horizontal direction in the dual basis again like in the corresponding graph in fig. 13b depicting the non-curved array result.

Thus the calculation according to the proposed method using the dual basis for parameterization and a segmentation in sectors as well changing to a local relative angel hypothesis for curved and/or large arrays results in a faster and more reliable transformation of the results into the angle domain.

As a rule of thumb for the sector sizes on can deduce the following:

The deviation of nearfield model, with the first nearfield terms spelled out, is

$$\|p_0 - d\| - \|p_s - d\| \approx \delta R_0 - \delta u_0^T d + \frac{d^2 - (u_0^T d)^2}{2R_0} - \frac{d^2 - (u_s^T d)^2}{2R_s}$$

with target at $p_0 = R_0 u_0$, reference point $p_s = R_s u_s$, antenna position d, difference in range $\delta R_0 = R_0 - R_s$ and difference in angle $\delta u_0 = u_0 - u_s$

Applying the triangle equality on the difference of first nearfield terms yields an estimate of sector sizes when comparing it to the wavelength $\lambda$.

For the angular sector size

$$\delta u \ll \lambda R / A^2,$$

and for the range sector size

$$\delta R \ll \lambda R^2 / A^2$$

where $A$ the aperture length.

Finally the angular resolution will be discussed. For a linear array of aperture length L (in units of wavelength), a simple rule of thumb of the angular resolution in direction $\theta_0$ is given by

$$\sin(\delta) = \frac{1}{L \cos(\theta_0)} \, .$$

Note that $L_0 = L \cos(\theta_0)$ can be interpreted as the aperture length of the array projected into the plane orthogonal to the target direction.

The concept of dual angles is also useful in determining a similar rule of thumb for the angular resolution of a skewed L-shaped array. The following discussion is limited to the special case of an array where all transmit elements are on one axis, and all receive elements on the other.

The final result for the angular resolution in terms of angular distance $\delta$ from the target direction will be

$$\sin^2(\delta) = h^2 + v^2 + 2hv \cos(\psi_0)$$

with $T_0^2 h^2 + R_0^2 v^2 = 1$ , where $T_0$, $R_0$ are the projected aperture lengths of Tx and Rx axes, respectively. The projected(!) axes form an angle of $\psi_0$, and *(h, v)* can be interpreted as local dual angles.

Derivation:

Assume a Tx aperture with length T, Rx aperture with length $R$ (in units of wavelength $\lambda$).

The antenna positions along the antenna axes $e_t$ and $e_r$, respectively, result in virtual positions

$$d = d(t,r) = te_t + re_r \, .$$

Denote the target at direction as $u_0$. Use the projection into orthogonal plane $P_{u_0}^{\perp} = I - u_0 u_0^T$ to form a local array basis from the projected array axes

$$B = (u_0, e_{h0}, e_{v0}) \, .$$

Now parametrize the DoA difference in local dual angles

$$\delta = u - u_0 = h e_{h0}^* + v e_{v0}^* + n \boldsymbol{u_0} \, .$$

For small $\delta$ (as the resolution should be), the normal part can be ignored $\delta^T u_0 \approx 0$.

By virtue of the dual basis, it holds

$$\delta^T d = ht \, \sin(\angle u_0, e_t) + vr \, \sin(\angle u_0, e_r) \, .$$

For the far-field array signal vector

$$a(u; d) = \exp(-ik \, u^T d)$$

the ambiguity function splits into Tx/Rx contribution

$$a(u)^H a(u_0) \approx \int \exp(ik \, \delta^T d) = \int \exp(ik \, ht) \, dt \int \exp(ik \, vr) \, dr$$

$$\propto \, \operatorname{sinc}(hT_0) \operatorname{sinc}(vR_0) \, ,$$

where $T_0 = T \sin(<u_0, e_t)$, $R_0 = R \sin(<u_0, e_r)$ are the projected aperture length of Tx and Rx axes, respectively.

(Note: Tx/Rx positions are treated here as continuous variables (instead of discrete). For a linear array $e_r = e_t$ with joint aperture of length $L$, this integral corresponds to a MIMO including a triangular taper that broadens the mainlobe. This is the reason why $\operatorname{sinc}(vL)^2$ appears instead of $\operatorname{sinc}(v2L)$, which would be the expected improvement in array resolution for an untapered MIMO.) The contour line of the first zero of this ambiguity function can be used as a measure for angular resolution. With $\operatorname{sinc}(1) = 0$, the resolution in terms of local dual angles is thus (approximately) given by

$$T_0^2 h^2 + R_0^2 v^2 = 1 \, .$$

(The exact contour line would be actually rectangular $\left( |h| = \dfrac{1}{T_0}, \, |v| = \dfrac{1}{R_0} \right)$, not an ellipse.)

From the representation of $u = h e_{h0}^* + v e_{v0}^* + (n + 1) u_0$ and $|u|^2 = 1$, we infer

$$1 - (n + 1)^2 = h^2 + v^2 + 2hv \cos\left( \angle \, e_{h0}^*, e_{v0}^* \right) \, .$$

This just happens to be related to the angular distance $\delta$ between $u_0$ and u by

$$\sin^2(\delta) = 1 - (u_0^T u)^2 = 1 - (1 + n)^2 \, .$$

**Reference Numerals**

| | |
|---|---|
| 1 | MIMO radar |
| 5 | MIMO radar array |
| 50 | orthonormal basis |
| 51, 52, 53 | axes of an orthonormal basis |
| 60 | dual basis |
| 61, 62, 63 | axes of the dual basis |
| 64 | origin |
| 100 | car |
| 102 | forward direction |
| 110 | windshield |
| 112, 114 | edges of the windshield |
| 122, 124 | fitted lines (dashed) |
| 127, 128 | points of closest contact |
| 164 | midpoint |
| 210 | 'azimuth ridge' |
| 220 | 'elevation ridge' |

| 410 | horizontal sidelobe ridge |
|---|---|
| 420 | vertical sidelobe ridge |
| 500 | rectangle of field of view (azimuth/elevation) |
| 510 | sector center position |
| 1000 | method of transformation |
| 1100 | split filed of view in the dual basis into sectors |
| 1200 | precompute nearfield model |
| 1300 | precompute split sensing matrices $A_h$, $A_v$, $T_h$, $T_v$, $R_h$, $R_v$ with relative angle hypotheses |
| 1400 | extract delay/Doppler slice for sector centers |
| 1500 | compensate delay/Doppler slice vector with near filed model |
| 1600 | rearrange compensated delay/Doppler slice vector into sub vectors |
| 1610 | rearrange mixed term subvectors into data matrices |
| 1700 | applying the split sensing matrices to the sub vectors/data matrices |

**Claims**

1. Method for transforming radar data of a coherent MIMO radar system to the angle domain, the coherent MIMO radar system comprising transmitter antennas (Tx) and receiver antennas (Rx) spanning a virtual 2D aperture wherein two lines defining two physical directions exist, which are not collinear and wherein a group of said antennas is associated with each of said two lines, and wherein the antennas of each of said two groups are spaced apart from each other mainly along the physical direction associated with the respective line of said two groups, where in the calculations to transform the received data from a delay/Doppler domain to an angle domain is carried out using a parameterization in a coordinate system that is a dual basis to a basis constructed from the two physical directions and a third direction being perpendicular to the first physical direction and said second physical direction, and wherein the origin is chosen to be the point of intersection of the lines defined by the two physical directions or the midpoint of the line segment connecting the points closest contact of these two lines.

2. Method according to claim 1 wherein the dual basis vector are derived as column vectors of an inverted and transposed matrix $D=B^{-T}$ being constructed from vectors defining the two physical directions v, h and their normal, where B= (n,h,v) and D= (n*,h*,v*).

3. Method according to claim 1 or 2, comprising the steps of

    (a) receiving a delay/Doppler-maps;
    (b) precompute split sensing matrices in the dual basis:

    $A_h$ the full horizontal sensing matrix of dimension $N_h \times M_h$, wherein $N_h$ is the sum of the number of transmitter antennas and receiver antennas on the horizontal and wherein $M_h$ is number of grid points for horizontal angle to cover the field of view in the dual basis,

    $T_h$ the horizontal transmission (Tx) matrix with the dimension $N_{Tx}^h \times M_h$, wherein and $N_{Tx}^h$ is the number of transmitter antennas on the horizontal axis,

    $R_h$ the horizontal receiver (Rx) matrix $N_{Rx}^h \times M_h$, wherein $N_{Rx}^h$ is the number of receiver antennas on the horizontal axis,

    $A_v$ the full vertical sensing matrix of dimension $N_v \times M_v$, wherein $N_v$ is the sum of the number of transmitter antennas and receiver antennas on the vertical axis and wherein

    $M_v$ is number of grid points for vertical angle to cover the field of view in the dual basis,

    $T_v$ the vertical transmission (Tx) matrix with the dimension $N_{Tx}^v \times M_v$, wherein and $N_{Tx}^{hv}$ is the number of transmitter antennas on the vertical axis,

    $R_v$ the vertical receiver (Rx) matrix $N_{Rx}^v \times M_v$, wherein $N_{Rx}^v$ is the number of receiver antennas on the vertical axis,

    and for each range-velocity of interest

    (c) extracting a snapshot vector $\mathbf{x}_s$ comprising of $N_{Tx}$ times $N_{Rx}$ complex numbers from a received delay/Doppler-map;

(d) ordering the vector components $x_{yz}$ of the extracted snapshot vector $\boldsymbol{x}_s$ into sub vectors $\boldsymbol{x}_{hh}$, $\mathbf{x}_w$, $\boldsymbol{x}_{hv}$, $\boldsymbol{x}_{vh}$ such that $\boldsymbol{x}_s = (\boldsymbol{x}_{hh}, \boldsymbol{x}_{vv}, \boldsymbol{x}_{hv}, \boldsymbol{x}_{vh})$, wherein the first index (v, h) is referring to axis the sender is located on and the second index (v, h) is refereeing to the axis the receiver located on, and

(e) regrouping the mixed-term sub vectors into datapoint matrices $X_{hv}$, $X_{vh}$ and

(f) transforming the snapshot vector $\mathbf{x}_s$ by applying the split sensing matrices according to

$$\text{reshape}(A^H x, [M_h, M_v]) = A_h^H x_{hh} + (A_v^H x_{vv})^T + (R_v^H X_{hv} \bar{T}_h)^T + R_h^H X_{vh} \bar{T}_v.$$

4. Method according to claim 3, further comprising

once

(g) splitting the field of view in the dual basis into sectors of equal size;

(h) precomputing a nearfield model $\mathbf{a}_s$ for each sector center, used

aa) to compensate in the measured data for the effects that array curvature and nearfield targets have on the phases; and

bb) to establish the sector center as reference direction for further processing;

(i) precomputing split sensing matrices of step (b) for a relative angle hypothesis in the dual basis of a sector, where $M_h$ is number of grid points for horizontal angle and $M_v$ is number of grid points for vertical angle, required to cover the field of view of one sector in the dual basis;

and where in the steps (c) to (f) for each range-velocity of interest are carried out for each sector,

where in step (c) a snapshot vector slice $\mathbf{x}_s$ comprising $N_{Tx}$ times $N_{Rx}$ complex numbers from a received delay/Doppler-map corresponding to the sector center is extracted; and wherein

(k) the extracted snapshot vector slice $\mathbf{x}_s$ is compensated by applying the nearfield model $\mathbf{a}_s$ to get a compensated snapshot vector slice $\tilde{\boldsymbol{x}}_s$.

$$\widetilde{x}_s = \overline{a}_s \odot x_s \,,$$

and wherein steps (d), (e), and (f) are performed using the compensated snapshot vector slice $\tilde{\boldsymbol{x}}_s$ and the split sensing matrices for the relative angle hypothesis according to step (i).

5. Method according to any one of the claims 1 to 4, wherein the physical direction for constructing the dual basis are determined by fitting straight lines to the antenna positions.

6. Method according to claim 5, wherein the fitting is achieved by minimizing the quadratic distances of the antenna positions from the respective fitted lines.

7. Method accroding to any one of the claims 1 to 6, wherein the positions of the receiver antennas and of the transmitter antennas are projected onto the physical directions, wherein these projected postions are used for deriving the sensing matrix and/or the split sensing matrices.

**Fig. 1**

**Fig. 2**

Fig. 3

Fig. 4

Electric angles

$U_z$

Electric angles

$U_v$

Electric angles

$U_z$

Electric angles

$U_v$

Fig. 5

z [m]

x [m]

y [m]

Fig. 6

Fig. 7

Fig. 8

Fig. 9

Fig. 10

Fig. 11

Fig. 12

Fig. 13a

Fig. 13b

Fig. 14a

Fig. 14b

**Fig. 15**

**Fig. 1**

Europäisches
Patentamt

European
Patent Office

Office européen
des brevets

## EUROPEAN SEARCH REPORT

**Application Number**

EP 24 18 6616

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/137616 A1 (KISHIGAMI TAKAAKI [JP]) 9 May 2019 (2019-05-09) | 1,2,5-7 | INV. G01S7/295 |
| A | * figures 1A,2 *<br>* paragraph [0012] *<br>* paragraph [0038] *<br>* paragraph [0088] - paragraph [0153] *<br>----- | 3,4 | G01S13/42<br>G01S13/931 |
| A | JP 2019 090749 A (FUJITSU LTD) 13 June 2019 (2019-06-13)<br>* paragraph [0011] - paragraph [0056] *<br>----- | 1-7 | |
| A | US 2020/256947 A1 (MOTODA YUJI [JP]) 13 August 2020 (2020-08-13)<br>* paragraph [0024] - paragraph [0054] *<br>----- | 1-7 | |

**TECHNICAL FIELDS SEARCHED (IPC)**

G01S
H01Q

The present search report has been drawn up for all claims

| Place of search | Date of completion of the search | Examiner |
|---|---|---|
| Munich | 28 October 2024 | Heiß, Michael |

EPO FORM 1503 03.82 (P04C01)

## ANNEX TO THE EUROPEAN SEARCH REPORT
## ON EUROPEAN PATENT APPLICATION NO.

EP 24 18 6616

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | Publication date | Patent family member(s) | Publication date |
|---|---|---|---|
| US 2019137616 A1 | 09-05-2019 | JP 7022916 B2<br>JP 2019086469 A<br>US 2019137616 A1 | 21-02-2022<br>06-06-2019<br>09-05-2019 |
| JP 2019090749 A | 13-06-2019 | NONE | |
| US 2020256947 A1 | 13-08-2020 | CN 111381213 A<br>JP 7224174 B2<br>JP 2020106294 A<br>US 2020256947 A1 | 07-07-2020<br>17-02-2023<br>09-07-2020<br>13-08-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023119316 A1
- US 20180246204 A1